# EUROPEAN PATENT APPLICATION

(11) **EP 2 696 478 A1**
(43) Date of publication of application: **12.02.2014**
(21) Application number: 12180007.2
(22) Date of filing: 10.08.2012
(51) Int. Cl.: H02K 5/173

(54) **A method for manufacturing an end plate arrangement of a rotating electrical machine, an end plate arrangement of a rotating electrical machine, and a rotating electrical machine**

(71) Applicant: ABB Oy, 00380 Helsinki (FI)
(72) Inventor: Aaltonen, Sami, 09120 Karjalohja (FI); Raute, Rami, 00980 Helsinki (FI)
(74) Representative: Kolster Oy Ab

(57) **Abstract**

The present invention relates to electric machines typically used for industrial applications, and more particularly to a method for manufacturing an end plate arrangement of a rotating electrical machine, to an end plate arrangement of a rotating electrical machine, and to a rotating electrical machine. A rotating electrical machine having an end plate arrangement according to the present invention has an end plate arrangement comprising an end plate inner ring (14) and an end plate outer ring (15), which end plate arrangement further comprises an insulation layer (16), which insulation layer (16) has been manufactured between the end plate inner ring (14) and the end plate outer ring (15) using injection moulding, and which insulation layer (16) is thicker at the side facing towards the rotating electrical machine.

## Description

### FIELD OF THE INVENTION

The present invention relates to the field of electric machines typically used for industrial applications, such as for motors and generators used within the transportation industry, energy industry, process industry and manufacturing industry, and more particularly to a method for manufacturing an end plate arrangement of a rotating electrical machine, to an end plate arrangement of a rotating electrical machine, and to a rotating electrical machine.

### BACKGROUND OF THE INVENTION

Rotating electrical machines are used in industry for different applications, such as electric motors and generators within the transportation industry, within the process and manufacturing industry as well as within the energy industry. An electric motor converts electrical energy into mechanical energy. Most electric motors operate through the interaction of magnetic fields and current-carrying conductors to generate force. Electric motors are found in applications as diverse as industrial applications, small and medium size industrial motors of highly standardized dimensions and characteristics provide convenient mechanical power for industrial uses. Larger electric motors are used for propulsion of ships in ship propulsion unit applications of the marine industry, for pipeline compressors, and for water pumps with ratings in the millions of watts.

An electric generator is a device used in electricity generation that converts mechanical energy to electrical energy. The source of mechanical energy may be a reciprocating or turbine steam engine, water falling through a turbine or waterwheel, an internal combustion engine, a wind turbine or any other source of mechanical energy.

The two main parts of a rotating electrical machine can be described in mechanical terms. A rotor is the rotating part of an electrical machine and a stator is the stationary part of an electrical machine. A rotor shaft is a mechanical component for transmitting torque and rotation. A rotor shaft is a carrier of torque; it is subject to torsion and shear stress equivalent to the difference between the input torque and the load. Rotor shafts must therefore be strong enough to bear the stress, whilst avoiding too much additional weight as that would in turn increase their inertia.

A rotor shaft of a rotating electrical machine also has a bearing arrangement, such as a rolling bearing. The bearing arrangement carries and supports the rotor to the stator housing of the electrical machine. The bearing arrangement of a rotating electrical machine does not only consist of rolling bearings but includes the components associated with the bearings such as the shaft and the end plate fastened to the housing of the stator. A bearing lubricant is a very important component of the bearing arrangement because it has to prevent wear and protect against corrosion so that the bearing can deploy its full performance. A bearing arrangement seal and an end plate arrangement of a rotating electrical machine are also very important components, the performance of which are of vital importance to the cleanliness of the lubricant. Cleanliness has a profound effect on bearing service life.

In the following, the prior art will be described with reference to the accompanying drawings of Figures 1 to 2, of which:
Figure 1 shows an end plate arrangement of a rotating electrical machine according to prior art; and
Figure 2 shows another end plate arrangement of a rotating electrical machine according to prior art.

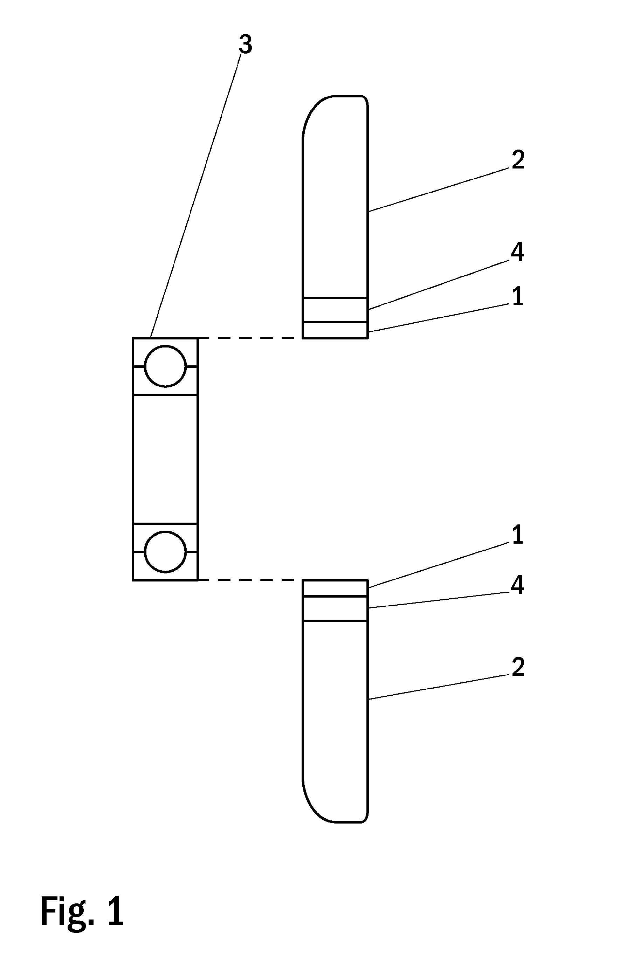

Figure 1 shows an end plate arrangement of a rotating electrical machine according to prior art. The end plate arrangement of a rotating electrical machine according to prior art comprises an end plate inner ring 1 and an end plate outer ring 2. A rolling bearing 3 of the rotor shaft of the rotating electrical machine is typically fitted directly to the end plate inner ring 1. Furthermore, the end plate arrangement of a rotating electrical machine according to prior art comprises an insulating ring 4 for insulating the rotor part of the rotating electrical machine from the stator part of the rotating electrical machine. The insulating ring 4 is necessary to isolate the outer ring connected to the stator from the inner ring connected to the rotor shaft via the bearing and thereby to cut the route of the bearing current.

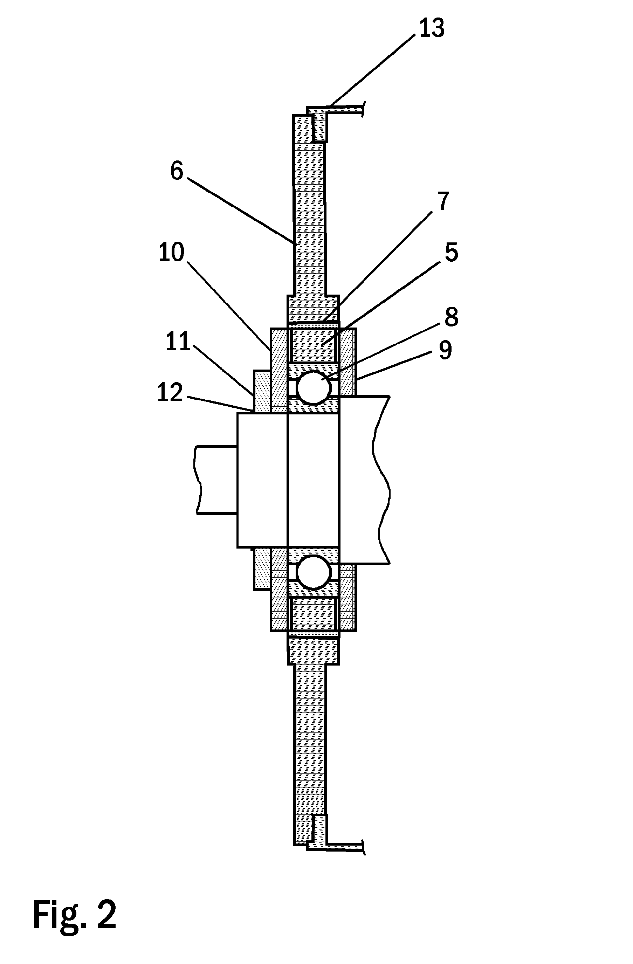

Figure 2 shows another end plate arrangement of a rotating electrical machine according to prior art. The end plate arrangement of a rotating electrical machine according to the prior art comprises an end plate inner ring 5 and an end plate outer ring 6. Furthermore, the end plate arrangement comprises an insulation ring 7. The rolling bearing is marked with a number 8. The end plate inner ring 5, the end plate outer ring 6, the insulation ring 7 and the rolling bearing are all fitted against a shaft plate, located on the machine side of the end plate and marked with a number 9. On the other side of the end plate arrangement of a rotating electrical machine according to prior art rolling bearing securing, lubricating and sealing components 10-12 are attached. The end plate outer ring 6 is fastened to the housing 13 of the electric machine.

In rotating electrical machines according to prior art bearing currents and shaft voltages have been recognized as a problem causing damages to the rotating electrical machines. A number of surveys have indicated that a large portion of all failures in rotating electrical machines are due to bearing current damage. The shaft voltage magnitude measured is commonly used as an indicator of the possible bearing current that results. It is the magnitude and passage of electrical current thru the bearing that results in ultimate mechanical damage.

In rotating electrical machines according to prior art bearing current damage caused by electrical current is characterized by the appearance of either pits or transverse flutes burnt into the bearing race. Electrical pitting continues until the bearing loses its coefficient of friction, further increasing the losses and breaking up bearing surface.

The magnitude of the shaft voltage will determine the bearing current present in lower quality bearings having asperity contacts the majority of the time or high quality bearings that use low resistivity lubricants. A high shaft voltage causes increased current and pits or craters to form since bearing current flows thru a number of points. Heating can occur at point contact to such a degree that the material melts creating craters, thus liberating wearing metal particles into the lubricant. A low shaft voltage has lower current amplitudes but has been found to still cause corrosive type of pitting due to grease decomposition.

For rotating electrical machines with slip rings the rotor insulation resistance is sometimes reduced due to an accumulated carbon dust layer produced by the carbon brushes. The carbon dust layer accumulated on top of the insulating ring 4, 7 causes dust bridge formation and forms a path for the bearing current from stator to rotor. The same applies for any impurities or dust particles entering on top of the insulating ring 4, 7 of the rotating electrical machine. The end plate arrangements of rotating electrical machines have one function as to cover the electrical parts of a rotating electrical machine and to prevent the dust and impurities from entering inside the rotating electrical machine.

The typical manufacturing and assembly process for an end plate arrangements of a rotating electrical machine according to prior art is quite troublesome and consists of a number of phases. First one needs the manufacture all the necessary parts, these including an end plate inner ring and an end plate outer ring as well as an insulating ring. For the assembly process first the end plate outer ring needs to be machined, secondly the end plate inner ring needs to be machined, thirdly the insulating ring needs to be machined. In the fourth phase the insulating ring is fitted and in the fifth phase insulating ring is secured in order to prevent the turning of the rings. In the sixth phase all the parts together are machined before fitting against the shaft plate of an end plate arrangement of a rotating electrical machine according to prior art.

The prior art an end plate arrangement manufacturing and assembly process for is very troublesome as it consists of a number of phases. Furthermore, the different parts of the assembly need to get moved around in between of the phases and this is also troublesome and resource consuming.

In today's demanding environment, the manufacturers of rotating electrical machines are constantly looking for improvements and cost savings in the manufacturing process. There is a demand in the market for a method for manufacturing an end plate arrangement of a rotating electrical machine that would improve the manufacturing process and provide savings when compared to the current prior art solutions. Likewise, there is a demand in the market for a method for an end plate arrangement of a rotating electrical machine as well as for a rotating electrical machine that would be easier to manufacture than the current prior art solutions.

### BRIEF DESCRIPTION OF THE INVENTION

An object of the present invention is thus to provide a method and an apparatus for implementing the method so as to overcome the above problems and to alleviate the above disadvantages.

The objects of the invention are achieved by a method for manufacturing an end plate arrangement of a rotating electrical machine, said method comprising the step of:
- manufacturing an end plate inner ring and an end plate outer ring, so that the method further comprises the step of:
- manufacturing an insulation layer between the end plate inner ring and the end plate outer ring using injection moulding;
which insulation layer is manufactured to be thicker at the side facing towards the rotating electrical machine.

Preferably, the end plate inner ring and the end plate outer ring are manufactured to have a protrusion and a groove matching said protrusion for preventing the end plate inner ring from turning with the outer ring of a rolling bearing of the rotating electrical machine rotor shaft fitted to the end plate inner ring.

Preferably, the forms of the end plate inner ring and the end plate outer ring and the form of the insulation layer are manufactured to have axially locking forms so that said forms prevent the axial movement of the inner ring and the bearing inside it.

Furthermore, the objects of the invention are achieved by an end plate arrangement of a rotating electrical machine, said end plate arrangement comprising an end plate inner ring and an end plate outer ring, so that said end plate arrangement further comprises an insulation layer, which insulation layer has been manufactured between the end plate inner ring and the end plate outer ring using injection moulding, and which insulation layer is thicker at the side facing towards the rotating electrical machine.

Preferably, at the side facing towards the rotating electrical machine the thicker insulation layer extends towards the end plate inner ring and towards the end plate outer ring. Alternatively, at the side facing towards the rotating electrical machine the thicker the insulation layer extends towards the end plate outer ring. Alternatively, at the side facing towards the rotating electrical machine the thicker insulation layer extends towards the end plate inner ring.

Preferably in the end plate arrangement, the end plate inner ring and the end plate outer ring have a protrusion and a groove matching said protrusion for preventing the end plate inner ring from turning with the outer ring of a rolling bearing of the rotating electrical machine rotor shaft fitted to the end plate inner ring. Further preferably, said protrusion and said groove are suitably designed with a round shape or with a rectangular shape.

Preferably in the end plate arrangement, the forms of the end plate inner ring and the end plate outer ring and the form of the insulation layer have axially locking forms so that said forms prevent the axial movement of the inner ring and the bearing inside it.

Furthermore, the objects of the invention are achieved by a rotating electrical machine having an end plate arrangement, said end plate arrangement comprising an end plate inner ring and an end plate outer ring, so that said end plate arrangement further comprises an insulation layer, which insulation layer has been manufactured between the end plate inner ring and the end plate outer ring using injection moulding, and which insulation layer is thicker at the side facing towards the rotating electrical machine.

Preferably in the rotating electrical machine having an end plate arrangement, the end plate inner ring and the end plate outer ring have a protrusion and a groove matching said protrusion for preventing the end plate inner ring from turning with the outer ring of a rolling bearing of the rotating electrical machine rotor shaft fitted to the end plate inner ring.

Preferably in the rotating electrical machine having an end plate arrangement, the forms of the end plate inner ring and the end plate outer ring and the form of the insulation layer have axially locking forms so that said forms prevent the axial movement of the inner ring and the bearing inside it.

### BRIEF DESCRIPTION OF THE DRAWINGS

Figure 1 shows an end plate arrangement of a rotating electrical machine according to prior art;
Figure 2 shows another end plate arrangement of a rotating electrical machine according to prior art;

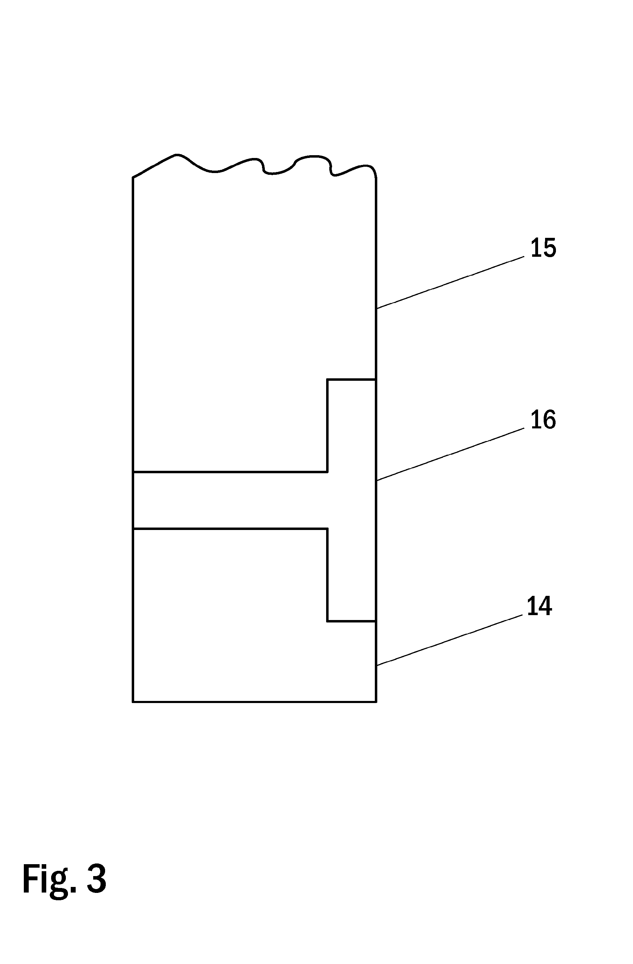

Figure 3 shows one embodiment of an end plate arrangement of a rotating electrical machine according to the present invention;

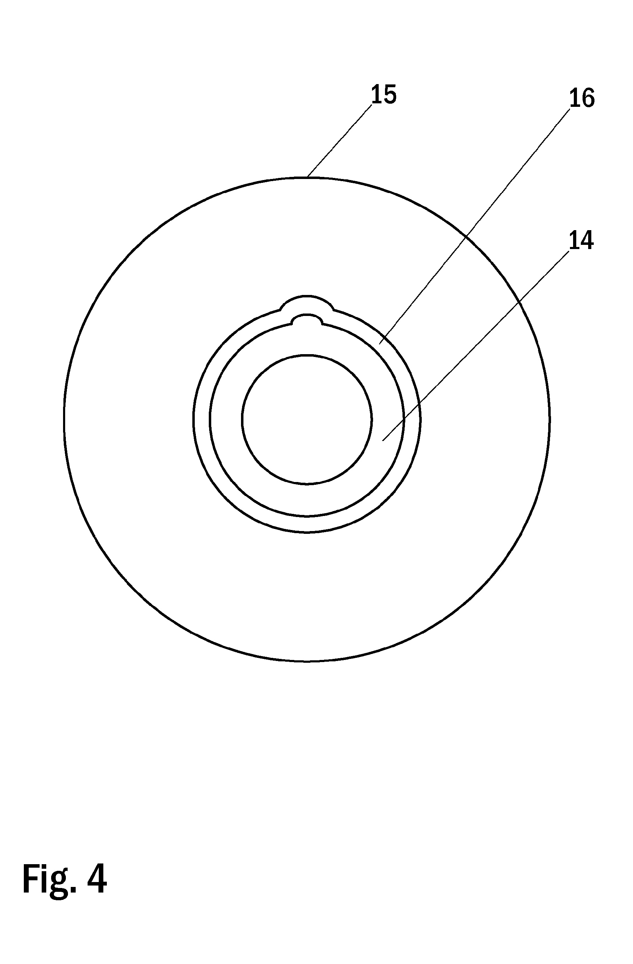

Figure 4 shows an cross-sectional view cut along the rotor shaft axis of one embodiment of an end plate arrangement of a rotating electrical machine according to the present invention;

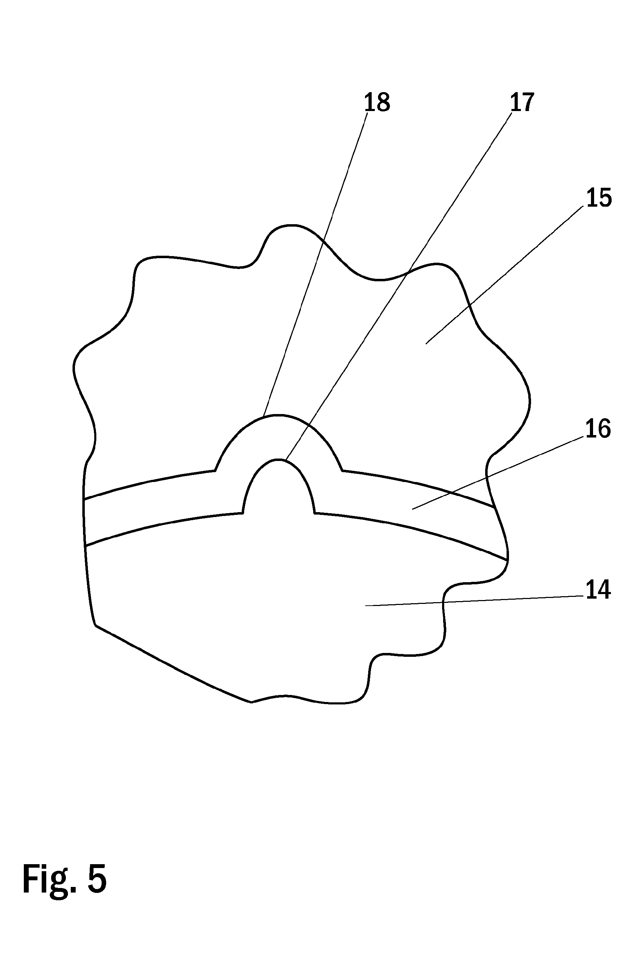

Figure 5 shows a detail of an cross-sectional view cut along the rotor shaft axis of one embodiment of an end plate arrangement of a rotating electrical machine according to the present invention;

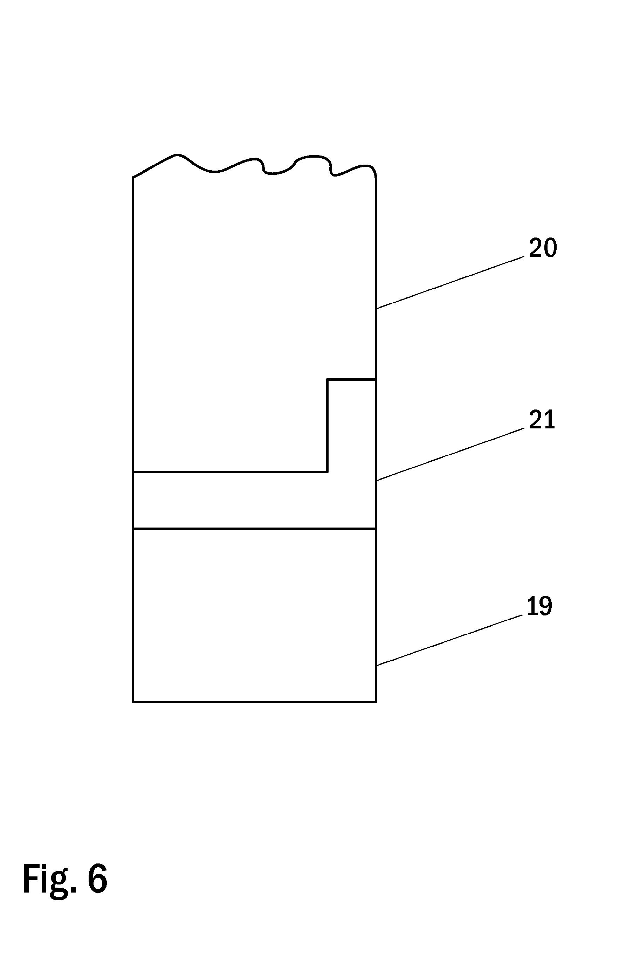

Figure 6 shows another embodiment of an end plate arrangement of a rotating electrical machine according to the present invention;

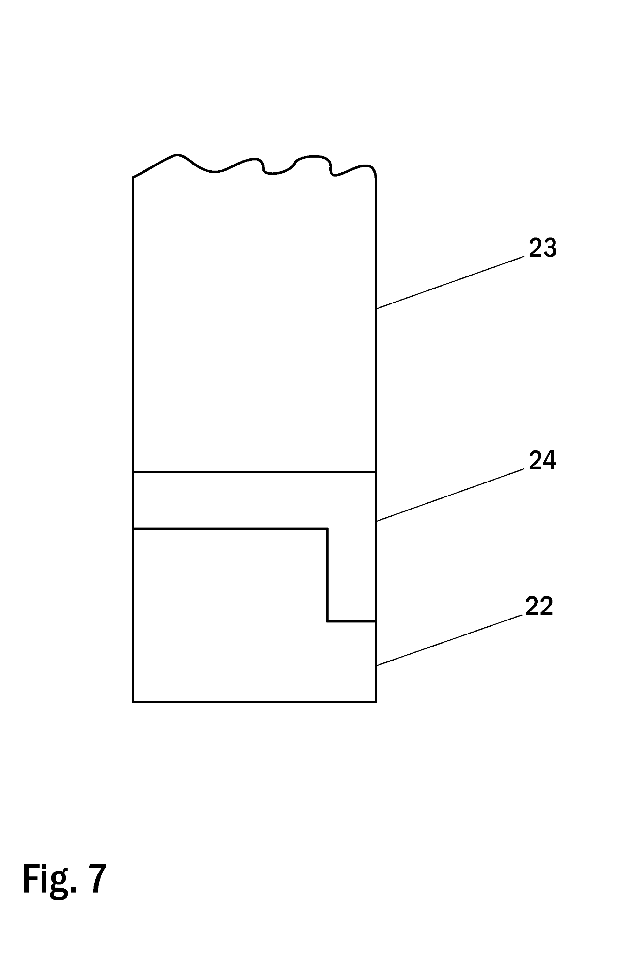

Figure 7 shows a third embodiment of an end plate arrangement of a rotating electrical machine according to the present invention;

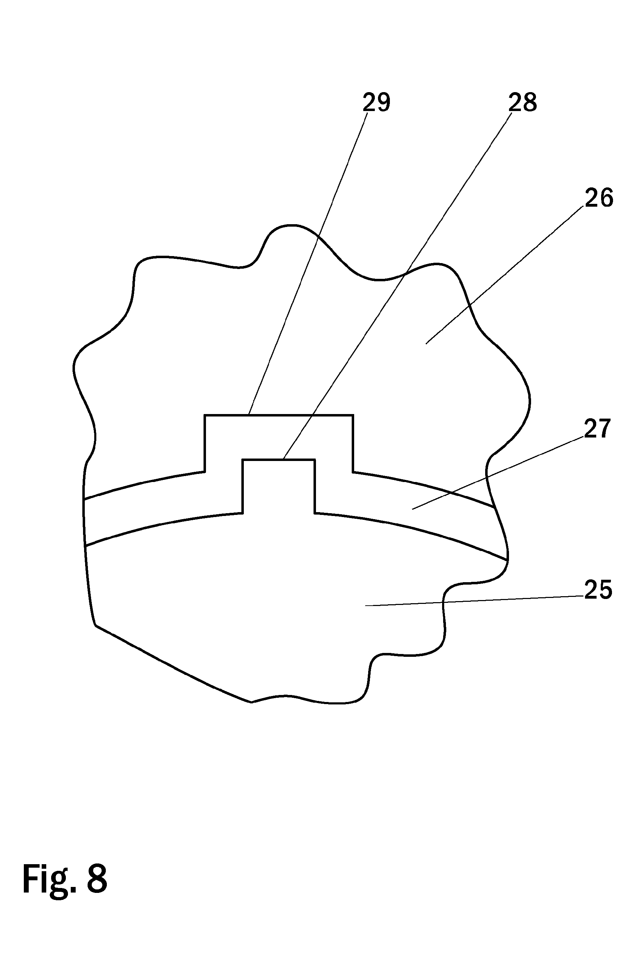

Figure 8 shows a detail of an cross-sectional view cut along the rotor shaft axis of a fourth embodiment of an end plate arrangement of a rotating electrical machine according to the present invention.

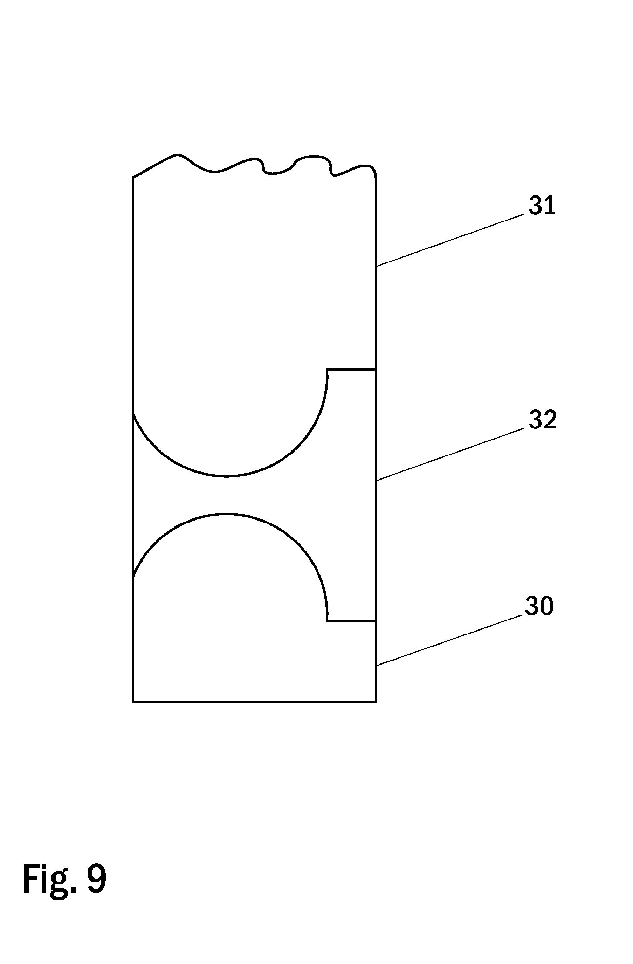

Figure 9 shows a fifth embodiment of an end plate arrangement of a rotating electrical machine according to the present invention.

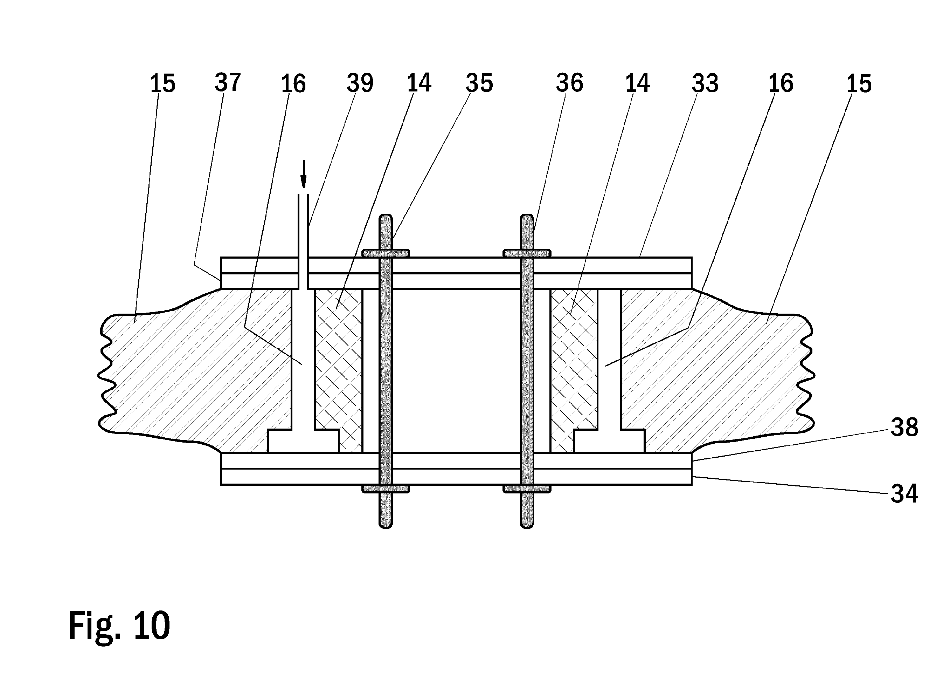

Figure 10 shows one embodiment of an insulation layer manufacturing arrangement for a rotating electrical machine end plate arrangement according to the present invention.

The prior art drawings of Figures 1 to 2 have been presented earlier. In the following, the invention will be described in greater detail by means of preferred embodiments with reference to the accompanying drawings of Figures 3 to 10.

### DETAILED DESCRIPTION OF THE INVENTION

Figure 3 shows one embodiment of an end plate arrangement of a rotating electrical machine according to the present invention. The end plate arrangement of a rotating electrical machine according to the present invention comprises an end plate inner ring 14 and an end plate outer ring 15. A rolling bearing of the rotor shaft of the rotating electrical machine is typically fitted directly to the end plate inner ring 14. The rolling bearing is directly connected to rotor shaft of the rotating electrical machine and the end plate outer ring 15 is connected to the stator of the rotating electrical machine.

Furthermore, the end plate arrangement of a rotating electrical machine according to the present invention comprises an insulation layer 16 for insulating the rotor part of the rotating electrical machine from the stator part of the rotating electrical machine. The insulation layer 16 is manufactured between the end plate inner ring 14 and the end plate outer ring 15 using injection moulding, such as e.g. RTM-technology (RTM, Resin Transfer Moulding). The insulation layer 16 is designed so that it is thicker at the side facing towards the rotating electrical machine, i.e. at the side facing towards the rotating electrical machine the insulation layer 16 is thicker than the whole insulation layer 16 on average. In the embodiment shown in Figure 3 at the side facing towards the rotating electrical machine the thicker insulation layer 16 extends towards the end plate inner ring 14 and towards the end plate outer ring 15. The thicker insulation layer 16 prevents dust bridge formation due to carbon dust. The thicker the insulation layer is, the longer the path of bearing current to be created by the carbon dust or other impurities. When the insulation is thicker the route of the bearing current via the possible dust coating is longer thus prohibiting the flow of current.

Figure 4 shows an cross-sectional view cut along the rotor shaft axis of one embodiment of an end plate arrangement of a rotating electrical machine according to the present invention. The end plate arrangement of a rotating electrical machine according to the present invention comprises an end plate inner ring 14, an end plate outer ring 15 and an insulation layer 16 for insulating the inner ring 14 from the outer ring 15. The insulation layer 16 is manufactured between the end plate inner ring 14 and the end plate outer ring 15 using injection moulding, such as e.g. RTM-technology (RTM, Resin Transfer Moulding). The forms of the end plate inner ring 14 and the end plate outer ring 15 and the form of the insulation layer 16 are designed so that said forms prevent the end plate inner ring 14 from turning with the outer ring of a rolling bearing of the rotating electrical machine rotor shaft fitted to the end plate inner ring 14. The end plate inner ring 14 turning prevention arrangement helps to keep the bearing stabile and prevents the axial movement of the inner ring and the bearing inside it.

Figure 5 shows a detail of an cross-sectional view cut along the rotor shaft axis of one embodiment of an end plate arrangement of a rotating electrical machine according to the present invention. The end plate arrangement of a rotating electrical machine according to the present invention comprises an end plate inner ring 14, an end plate outer ring 15 and an insulation layer 16. The end plate inner ring 14 has a protrusion 17 towards the insulation layer 16. Likewise the insulation layer 16 protrudes towards the end plate outer ring 15, which end plate outer ring 15 has a groove 18 to match the protrusion 17 of the end plate inner ring 14. In Figure 5 the protrusion 17 and the groove 18 are designed with a round shape. The forms of the end plate inner ring 14 and the end plate outer ring 15 and the form of the insulation layer 16 are designed so that said forms prevent the end plate inner ring 14 from turning with the outer ring of a rolling bearing of the rotating electrical machine rotor shaft fitted to the end plate inner ring 14. Alternatively the end plate outer ring 15 may have a protrusion towards the end plate inner ring 14 the end plate inner ring 14 may have a matching groove, respectively. The end plate inner ring 14 turning prevention arrangement helps to keep the bearing stabile and prevents the axial movement of the inner ring and the bearing inside it. The surfaces of the end plate inner ring 14 and the end plate outer ring 15 may be roughened for extra grip effect.

Figure 6 shows another embodiment of an end plate arrangement of a rotating electrical machine according to the present invention. The another embodiment of an end plate arrangement of a rotating electrical machine according to the present invention comprises an end plate inner ring 19 and an end plate outer ring 20. Furthermore, the end plate arrangement comprises an insulation layer 21, which insulation layer 21 is manufactured between the end plate inner ring 19 and the end plate outer ring 20 using injection moulding, such as e.g. RTM-technology. The insulation layer 21 is designed so that it is thicker from the side facing towards the rotating electrical machine. In the embodiment shown in Figure 6 at the side facing towards the rotating electrical machine the thicker insulation layer 21 extends towards the end plate outer ring 20. The thicker insulation layer 21 prevents dust bridge formation due to carbon dust.

Figure 7 shows a third embodiment of an end plate arrangement of a rotating electrical machine according to the present invention. The third embodiment of an end plate arrangement of a rotating electrical machine according to the present invention comprises an end plate inner ring 22 and an end plate outer ring 23. Furthermore, the end plate arrangement comprises an insulation layer 24, which insulation layer 24 is manufactured between the end plate inner ring 22 and the end plate outer ring 23 using injection moulding, such as e.g. RTM-technology. The insulation layer 24 is designed so that it is thicker from the side facing towards the rotating electrical machine. In the embodiment shown in Figure 7 at the side facing towards the rotating electrical machine the thicker insulation layer 24 extends towards the end plate inner ring 22. The thicker insulation layer 24 prevents dust bridge formation due to carbon dust.

Figure 8 shows a detail of an cross-sectional view cut along the rotor shaft axis of a fourth embodiment of an end plate arrangement of a rotating electrical machine according to the present invention. The fourth embodiment of an end plate arrangement of a rotating electrical machine according to the present invention comprises an end plate inner ring 25, an end plate outer ring 26 and an insulation layer 27. The end plate inner ring 25 has a protrusion 28 towards the insulation layer 27. Likewise the insulation layer 27 protrudes towards the end plate outer ring 26, which end plate outer ring 26 has a groove 29 to match the protrusion 28 of the end plate inner ring 25. In Figure 8 the protrusion 28 and the groove 20 are designed with a rectangular shape. The forms of the end plate inner ring 25 and the end plate outer ring 26 and the form of the insulation layer 27 are designed so that said forms prevent the end plate inner ring 25 from turning with the outer ring of a rolling bearing of the rotating electrical machine rotor shaft fitted to the end plate inner ring 25. Alternatively the end plate outer ring 26 may have a protrusion towards the end plate inner ring 25 the end plate inner ring 25 may have a matching groove, respectively. The end plate inner ring 25 turning prevention arrangement helps to keep the bearing stabile and prevents the axial movement of the inner ring and the bearing inside it. The surfaces of the end plate inner ring 25 and the end plate outer ring 26 may be roughened for extra grip effect.

Figure 9 shows a fifth embodiment of an end plate arrangement of a rotating electrical machine according to the present invention. The fifth embodiment of an end plate arrangement of a rotating electrical machine according to the present invention comprises an end plate inner ring 30 and an end plate outer ring 31. Furthermore, the end plate arrangement comprises an insulation layer 32, which insulation layer 32 is manufactured between the end plate inner ring 30 and the end plate outer ring 31 using injection moulding, such as e.g. RTM-technology. The insulation layer 32 is designed so that it is thicker from the side facing towards the rotating electrical machine. In the embodiment shown in Figure 9 the insulation layer 32 extends towards the end plate inner ring 30 and towards the end plate outer ring 31 at the side facing towards the rotating electrical machine. The thicker insulation layer 32 prevents dust bridge formation due to carbon dust. The forms of the end plate inner ring 30 and the end plate outer ring 31 and the form of the insulation layer 32 are designed to axially locking forms so that said forms prevent the axial movement of the inner ring and the bearing inside it. The surfaces of the end plate inner ring 30 and the end plate outer ring 31 may be roughened for extra grip effect.

Figure 10 shows one embodiment of an insulation layer manufacturing arrangement for a rotating electrical machine end plate arrangement according to the present invention. The presented embodiment of an insulation layer manufacturing arrangement for a rotating electrical machine end plate arrangement according to the present invention comprises an end plate inner ring 14 and an end plate outer ring 15. A rolling bearing of the rotor shaft of the rotating electrical machine is typically fitted directly to the end plate inner ring 14. The rolling bearing is directly connected to rotor shaft of the rotating electrical machine and the end plate outer ring 15 is connected to the stator of the rotating electrical machine. Furthermore, the presented insulation layer manufacturing arrangement according to the present invention comprises moulds 33, 34, such as e.g. steel moulds 33, 34, which moulds 33, 34 are fitted to keep the end plate inner ring 14 and the end plate outer ring 15 in place. The moulds 33, 34 may be accompanied by a tightening arrangement 35, 36 and seals 37, 38, such as e.g. rubber seals 37, 38. The tightening arrangement 35, 36 may comprise a set of dowel pins 35, 36 for tightening the mould arrangement 33, 34.

The embodiment of an insulation layer manufacturing arrangement for a rotating electrical machine end plate arrangement according to the present invention comprises an injection channel 39. The insulation layer 16 is manufactured between the end plate inner ring 14 and the end plate outer ring 15 using injection moulding, such as e.g. RTM-technology (RTM, Resin Transfer Moulding). The moulding material for the insulation layer 16 is injected through the injection channel 39, wherefrom it expands into the space between the end plate inner ring 14 and the end plate outer ring 15 thereby forming the insulation layer 16. The end plate arrangement according to the present invention may be pre-heated before the injection of the moulding material. The moulding material may be any kind of insulating material, such as fiberglass, fibreglass composite, epoxy, epoxy composite, polyester resin, or other suitable material having sufficient insulating and mechanical properties required for the end plate of the electrical machine. Further the material suitably is shrink-resistant and the creeping of the material is low.

With the help of the solution according to the present invention the manufacturers of rotating electrical machines will be able to considerably improve the manufacturing process and provide savings in comparison to the current prior art solutions. The solution according to the present invention may be utilised in any kind of rotating electrical machines.

It will be obvious to a person skilled in the art that, as the technology advances, the inventive concept can be implemented in various ways. The invention and its embodiments are not limited to the examples described above but may vary within the scope of the claims.

## Claims

1. A method for manufacturing an end plate arrangement of a rotating electrical machine, said method comprising the step of:
- manufacturing an end plate inner ring (14), (19), (22), (25), (30) and an end plate outer ring (15), (20), (23), (26), (31),
**characterized by** the method further comprising the step of:
- manufacturing an insulation layer (16), (21), (24), (27), (32) between the end plate inner ring (14), (19), (22), (25), (30) and the end plate outer ring (15), (20), (23), (26), (31) using injection moulding;
which insulation layer (16), (21), (24), (27), (32) is manufactured to be thicker at the side facing towards the rotating electrical machine.

2. A method according to claim 1, **characterized in that** the end plate inner ring (14), (25) and the end plate outer ring (15), (26) are manufactured to have a protrusion (17), (28) and a groove (18), (29) matching said protrusion (17), (28) for preventing the end plate inner ring (14), (25) from turning with the outer ring of a rolling bearing of the rotating electrical machine rotor shaft fitted to the end plate inner ring (14), (25).

3. A method according to claim 1 or claim 2, **characterized in that** that the forms of the end plate inner ring (30) and the end plate outer ring (31) and the form of the insulation layer (32) are manufactured to have axially locking forms so that said forms prevent the axial movement of the inner ring and the bearing inside it.

4. An end plate arrangement of a rotating electrical machine, said end plate arrangement comprising an end plate inner ring (14), (19), (22), (25), (30) and an end plate outer ring (15), (20), (23), (26), (31), **characterized in that** said end plate arrangement further comprises an insulation layer (16), (21), (24), (27), (32), which insulation layer (16), (21), (24), (27), (32) has been manufactured between the end plate inner ring (14), (19), (22), (25), (30) and the end plate outer ring (15), (20), (23), (26), (31) using injection moulding, and which insulation layer (16), (21), (24), (27), (32) is thicker at the side facing towards the rotating electrical machine.

5. An end plate arrangement according to claim 4, **characterized in that** at the side facing towards the rotating electrical machine the thicker insulation layer (16), (32) extends towards the end plate inner ring (14), (30) and towards the end plate outer ring (15), (31).

6. An end plate arrangement according to claim 4, **characterized in that** at the side facing towards the rotating electrical machine the thicker the insulation layer (21) extends towards the end plate outer ring (20).

7. An end plate arrangement according to claim 4, **characterized in that** at the side facing towards the rotating electrical machine the thicker insulation layer (24) extends towards the end plate inner ring (22).

8. An end plate arrangement according to any one of claims 4 to 7, **characterized in that** the end plate inner ring (14), (25) and the end plate outer ring (15), (26) have a protrusion (17), (28) and a groove (18), (29) matching said protrusion (17), (28) for preventing the end plate inner ring (14), (25) from turning with the outer ring of a rolling bearing of the rotating electrical machine rotor shaft fitted to the end plate inner ring (14), (25).

9. An end plate arrangement according to claim 8, **characterized in that** said protrusion (17), (28) and said groove (18), (29) are suitably designed with a round shape (17), (18) or with a rectangular shape (28), (29).

10. An end plate arrangement according to any one of claims 4 to 9, **characterized in that** the forms of the end plate inner ring (30) and the end plate outer ring (31) and the form of the insulation layer (32) have axially locking forms so that said forms prevent the axial movement of the inner ring and the bearing inside it.

11. A rotating electrical machine having an end plate arrangement, said end plate arrangement comprising an end plate inner ring (14), (19), (22), (25), (30) and an end plate outer ring (15), (20), (23), (26), (31), **characterized in that** said end plate arrangement further comprises an insulation layer (16), (21), (24), (27), (32), which insulation layer (16), (21), (24), (27), (32) has been manufactured between the end plate inner ring (14), (19), (22), (25), (30) and the end plate outer ring (15), (20), (23), (26), (31) using injection moulding, and which insulation layer (16), (21), (24), (27), (32) is thicker at the side facing towards the rotating electrical machine.

12. A rotating electrical machine according to claim 11, **characterized in that** the end plate inner ring (14), (25) and the end plate outer ring (15), (26) have a protrusion (17), (28) and a groove (18), (29) matching said protrusion (17), (28) for preventing the end plate inner ring (14), (25) from turning with the outer ring of a rolling bearing of the rotating electrical machine rotor shaft fitted to the end plate inner ring (14), (25).

13. A rotating electrical machine according to claim 11 or claim 12, **characterized in that** the forms of the end plate inner ring (30) and the end plate outer ring (31) and the form of the insulation layer (32) have axially locking forms so that said forms prevent the axial movement of the inner ring and the bearing inside it.
